# EUROPEAN PATENT APPLICATION

(11) **EP 0 639 490 A1**
(43) Date of publication of application: **22.02.1995**
(21) Application number: 94305750.5
(22) Date of filing: 03.08.1994
(51) Int. Cl.: B62B 7/12, B60N 2/28

(54) **Combined pushchair and car seat**

(30) Priority: 03.08.1993 GB 9316048; 20.12.1993 GB 9325961
(71) Applicant: Watts, Nicholas Paul, Kettering, Northants NN14 4BX (GB)
(72) Inventor: Watts, Nicholas Paul, Kettering, Northants NN14 4BX (GB)
(74) Representative: Dawson, Elizabeth Ann

(57) **Abstract**

A combined push chair and car seat comprises a seat support frame (11) to which are attached four legs (31,32,33,34) carrying wheels (21,22,23,24). The legs are rotatable with respect to the frame from a retracted configuration to an extended configuration. Spring means (50,51) whose operation is initiated by an actuating lever (40), operate to move the legs from the retracted position to the extended position.

## Description

The present invention relates to a combined pushchair and car seat for small children.

For several years now it has been compulsory in some countries to transport children who are too small for adult seat belts in special seats which can be firmly strapped down. Once a journey is completed, the children are often transferred to pushchairs, otherwise known as buggies. This involves two major drawbacks. Firstly the buggy takes up valuable space in the vehicle luggage compartment. Secondly, the transfer process often wakes the child causing distress. Thus, various combined buggies and car seats have been proposed hitherto. Currently available versions require the seat to be detached from the buggy frame for use inside a vehicle, so that the frame still needs to be stored elsewhere. There have also been various proposals for folding the buggy components into the shell of the car seat but these have all had certain drawbacks and seem not to have reached the market place. For example, there are versions involving telescoping legs which are mechanically complicated and difficult to manufacture, and also cumbersome to convert from buggy mode to car seat mode and vice versa. Some versions involve several manual operations by the user to convert from one mode to the other.

Some of the simplest of the known proposals include four legs carrying wheels which are rotatable with respect to a seat support frame. Examples are shown in WO-A-8802714, US-A-4989888 and US-A-4834403. A problem with these known arrangements seems to be that they need to be held above the ground whilst the legs are extended. Thus, there is still a need for a combined car seat and buggy which is simple and inexpensive to manufacture and easy to convert from one mode to another.

The present invention provides a foldable pushchair comprising a seat support frame to which are attached four legs carrying wheels, the legs being rotatable with respect to the frame from an extended position to a retracted position in which the wheels are positioned either side of the seat support frame, characterised by spring means operable to move the legs from the retracted position to the extended position. Thus, the wheels can be readily retracted through simple rotational movement and, being located at the side of the seat, the seat can readily be used to transport its occupant, in a car or any other vehicle since the wheels are no longer in the way.

Preferably separate spring means are provided for the front and rear legs. Preferably the spring means direct a linear force on the legs.

The spring means are preferably heavily damped to avoid sudden movement. Thus, the presently preferred spring means comprise gas struts. Preferably the spring means are so mounted that they do not act to erect the legs until the legs have been partially rotated towards the erect position. This avoids the need for any separate means to lock them in the retracted position. The spring means may additionally act to retain the legs in the retracted position. Preferably, separate spring means are provided for the front and rear legs. In order for the spring means to act to keep the rear legs erected and retracted, the spring means for the rear legs may be positioned to direct a force either above or below the pivot axis of the rear legs depending on the rotational position of the rear legs.

The spring means can be made sufficiently strong to lift the weight of the seat plus a child which may be in it.

Actuator means are preferably provided to push the legs from the retracted position towards the extended position. The spring means then continue the pushing movement. Preferably, a single actuator suffices for both pairs of legs. The actuator means may comprise a lever, pivotably mounted with respect to the frame. In the retracted configuration, the wheels are preferably adjacent to each other so that a single lever may be used to push both wheels. Preferably the front wheels rotate together about a common axis, as do the rear wheels so that one lever will move the wheels on both sides of the seat.

In the case of linear acting spring means, additional retaining clips may be desirable to keep the front wheels at least in their retracted position. These are preferably sufficiently weak that they are easily overcome by the actuator means without the need for additional manual operation.

Preferably, additional locking means may be provided for retaining the pushchair in its erect configuration. These may comprise a foldable arm acting between one leg and the seat frame with additional retaining means to keep it in its unfolded configuration, and/or a spring clip arrangement to keep one or both of the axles in the desired rotational position.

Preferably the seat has double side walls defining a recess for storing the wheels substantially out of sight in the retracted configuration. The wheels are preferably retained well within the recess to avoid any contact with the vehicle upholstery in use.

An embodiment of the invention will now be described by way of example only and with reference to the accompany drawings in which:
Figure 1 is a perspective view of the seat support frame, with the seat removed, and the wheels in retracted configuration, for use as a car seat;
Figure 2 is a perspective view of the support frame and seat assembled, with the wheels in retracted configuration;
Figure 3 is a perspective view showing the buggy partially erected;
Figure 4 is a perspective view showing the buggy fully erected;
Figure 5 is a perspective view from the opposite side to the preceding Figures showing the buggy fully erected;
Figures 6 and 7 are side elevations showing the front wheel pivot assembly in more detail in the partially folded (Figure 6) and fully folded (Figure 7) positions.
Figures 8, 9 and 10 are rear elevations showing the spring clip arrangement for keeping the rear legs in the erect configuration.

The illustrated buggy comprises a seat 10 and a frame 11. The seat 10 is made from moulded plastic and comprises a shell in which the baby sits and double side walls 13, 14 defining spaces open to the rear and base in which the wheels of the frame may be housed, in a manner to be described in more detail below.

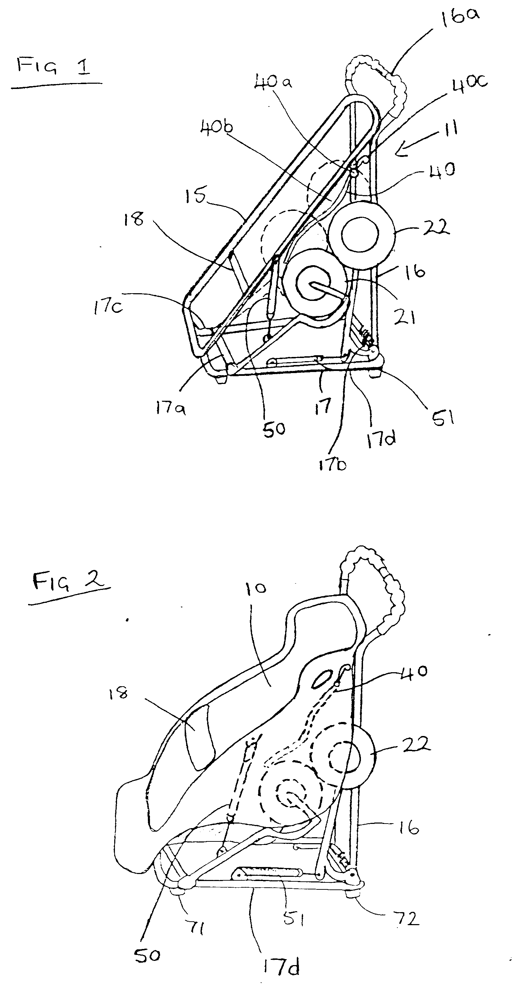

The frame 11 is made from tubular metal, and comprises a rectangular frame portion 15 which surrounds the seat in use, an inverted U-shaped frame portion 16 which extends generally vertically at the back of the seat 10, and a rectangular frame portion 17 which is oriented generally horizontally beneath the seat. The front and rear members 17a, 17b of the frame portion 17 are rotatable with respect to the remainder of the frame 11 about their longitudinal axes to form front and rear axles. The side members 17d, 17c extend forwardly from the front member 17a and are welded or otherwise secured to the frame portion 15. The U-Shaped frame portion 16 is welded to frame portions 15 and 17 and forms a handle 16a by which the buggy can be pushed in the unfolded configuration of the frame. The U-shaped frame portion 16 also includes a fixed cross-member 16b which is parallel to axle 17b. Thus, the three frame portions 15, 16, 17 are fixed together in a triangular configuration shown most clearly in Figure 1.

The seat includes a cross bar 18 which helps to keep the baby from falling out of the seat, and may be used as a handle to carry the seat and frame assembly, it is preferably padded for comfort.

Four wheels 21, 22, 23, 24 are attached to the frame via legs 31, 32, 33, 34. Legs 31 and 34 are identical and in the erect configuration they extend forwardly from the frame, substantially in line with the sides of frame portion 15, to provide a stable base for the buggy. Legs 32 and 33 are also identical and extend generally vertically, in the erect configuration, behind the seat 10. The front legs 31, 34 are parallel and are attached to opposite ends of frame member 17a so that the frame member 17a and legs 31, 34 can rotate together with respect to the rest of the frame 11. The front legs are generally straight and end in a forwardly curved portion which extends around the front wheels. The rear legs 32, 33 are parallel and are attached to opposite ends of the frame member 17b so that frame member 17b and rear legs can rotate together with respect to the frame 11. The rear legs are generally straight except for respective forwardly curved portions 32a, 33a at the ends remote from the wheels. The ends of the forwardly curved portions are attached to the frame member 17b. One of the rear legs, in this case the left rear leg 32, additionally has a portion 32b extending upwardly from the curved portion in line with the remainder of the leg 32, whose function will be described below. Wheels 21, 22, 23, 24 are rotatably mounted to the legs 31, 32, 33, 34 to rotate about horizontal axes of rotation. Preferably the axes of rotation of the wheels are fixed to facilitate return to the retracted configuration. However, they may be mutli-directional wheels if desired.

A lever 40 is pivotably mounted on the frame 11 at pivot point 40a indicated in Figure 1. The lever comprises arm 40b and manual actuator 40c. In the folded configuration the end of the arm engages the front left wheel 21.

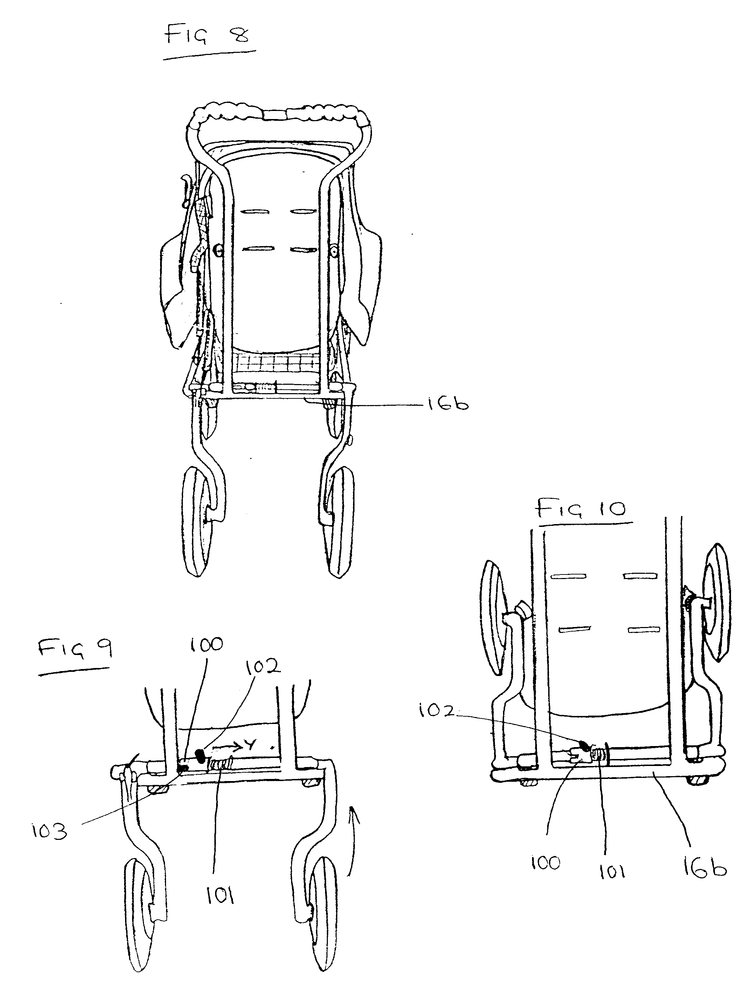

In order to move the legs and wheels from the erect configuration of Figure 4 to the retracted configuration of Figure 2, they are pivoted in the anti-clockwise direction as viewed in Figure 4. The lengths of the legs are chosen such that in the folded configuration the front wheels are in front of the rear wheels adjacent to and possibly, abutting the rear wheels. In the retracted configuration, the wheels are hidden in the double side walls of the seat 10, as shown in Figure 2.

In order to bias the legs in the erect configuration, two gas struts 50 and 51 are provided. Gas strut 50 extends between leg 31 at a position below its pivot axis and the side of the frame portion 15, approximately one third of the distance along the side from the base 17. Gas strut 51 extends between frame side member 17d at a position about one third of its length from the front and the end of the upright portion 32b of leg 32.

The configuration of the gas struts 51 and 52 is preferably such that when the legs are folded, the force of gas strut 51 is directed below the axis of rotation of the rear legs and the force of gas strut 52 is almost parallel to leg 31. Thus, any downward force from strut 52 on the front legs is minimal and the force from gas strut 51 tends to bias leg 32 in the anti-clockwise direction as viewed in Figure 1. In fact, in figures 1 and 2, the front legs are not quite pushed fully home as illustrated. Additional clips for keeping the legs in place may be provided. For example 'C' shaped pipe clips may be provided within the seat shell 10 for retaining the front legs in place. These are preferably sufficiently weak that they are readily overcome by operation of actuator 40c to be described below.

The gas struts 51 and 52 may additionally be so heavily damped that once they are pushed fully home, they need to be extended a small amount by an external force before they exert any force themselves to fully extend. Thus, in the fully folded configuration the gas struts are both pushed fully home and the folded configuration is secure.

The erection of the legs to convert from car seat mode to buggy mode will now be described:

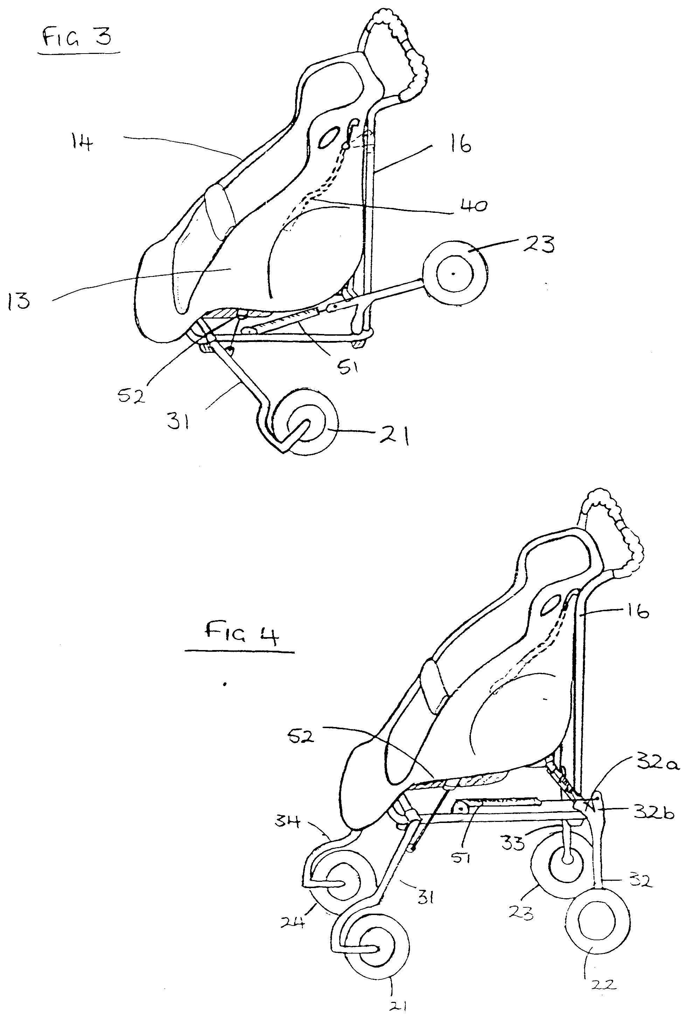

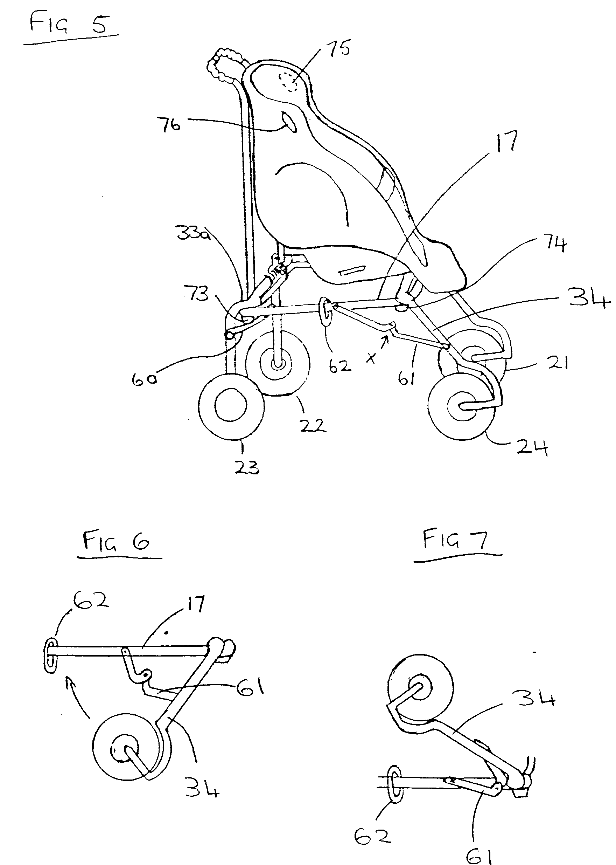

With the seat placed on the ground, when the actuator 40c is pushed forwardly arm 40b acts firstly on wheel 21 and then on wheel 22 to cause both pairs of legs to rotate clockwise as shown in Figure 3. By the time both sets of wheels reach the floor, the configuration of the gas struts with respect to the legs is such that they are biassed in the clockwise direction and in fact they may be sufficiently powerful that they lift the seat, complete with child, off the floor to the configuration shown in Figures 4 and 5.

It should be clear from the foregoing that only a small clockwise force from lever 40b is sufficient to bring gas strut 52 into operation on the front legs 31,34. Equally, the configuration of lever 40b, gas strut 51 and leg 32 may be made such that only a small clockwise push is required to take the assembly of strut 52 and leg 32 past its unstable central position, from which gas strut 52 operates to rotate leg 32 clockwise as illustrated.

Stops (not shown) are provided on the frame to limit the forward rotation of the front legs. In addition, the rear legs are held in the vertical position by means of a spring-clip assembly shown in Figures 8, 9 and 10.

Figure 8 is a rear elevation of the pushchair with the legs extended, and figures 9 and 10 are partial rear elevations showing the legs extended and retracted respectively. As noted above, the U-shaped frame portion 16 ends in a fixed cross-member 16b, which is parallel to the rear axle 17b. The rear axle is provided with a notched sleeve 100 which is rotationally fixed with respect to the frame 11 and slidable from left to right as shown. A spring 101 biasses sleeve 100 to the left. A lever 102 serves for moving the sleeve 100 to the right. A lug 103 is fixed to and rotates with the rear axle 17b. When the rear legs are upright, the lug 103 enters the notch in sleeve 100 to prevent further rotational movement of the legs. The lug 103 can be readily released from the sleeve 100 by moving lever 102 to the right against the force of spring 100.

To further ensure that the stroller configuration cannot collapse accidentally, and to provide a more rigid structure, a folding arm 61 extends between leg 34 and frame member 17c shown in Figure 5. The arm 61 has suitable stop means so that it can only be folded one way. Thus it has to be pulled downwardly so that the front legs can be rotated rearwardly as shown in stages in Figures 6 and 7. To secure the pushchair/buggy configuration, the arm 61 is pushed in the direction shown by arrow X and a slip ring 62 which extends around the member 17c is pushed forwardly to lock the arm 61 in place.

To return from buggy to car seat mode, ring 62 is slid rearwardly, the folding arm 61 is pulled towards the ground and the wheels are then rotated rearwardly. Once the front wheels are to the rear of vertical as shown in Figure 5, the seat can be pushed towards the floor to assist the rotation of the legs, to save having to lift it during folding. The wheels are then tucked right into the position shown in Figures 1 and 2.

As shown in the drawings, the frame 11 has four feet 71, 72, 73, 74 enabling it to stand firmly on the ground. Slots 75, 76 may be provided in the sides of the seat at the top to facilitate lifting and manoeuvring of the seat.

## Claims

1. A foldable pushchair comprising a seat support frame (11) to which are attached four legs (31,32,33,34) carrying wheels (21,22,23,24), the legs being rotatable with respect to the frame from an extended position to a retracted position in which the wheels are positioned either side of the seat support frame, characterised by spring means (50,51) operable to move the legs from the retracted position to the extended position.

2. A foldable push chair as claimed in claim 1 in which the legs (31,32,33,34) pivot rearwardly and upwardly with respect to the frame (11) in moving from the extended position to the retracted position.

3. A foldable push chair as claimed in claim 1 or 2 including separate spring means for the front (31,34) and rear (32,33) legs.

4. A foldable push chair as claimed in claim 3 in which the spring means (51) for the rear legs at least additionally act to retain the legs in the retracted position.

5. A foldable push chair as claimed in claim 4 in which the spring means for the rear legs are positioned to direct a force above or below the pivot axis of the rear legs depending on the rotational position of the legs.

6. A foldable push chair as claimed in any preceding claim in which the spring means (50,51) direct a linear force on the legs (31,32,33,34).

7. A foldable push chair as claimed in any preceding claim in which the spring means (50,51) are heavily damped.

8. A foldable push chair as claimed in any preceding claim in which the spring means (50,51) are sufficiently strong to cause the push chair to lift the weight of the seat carrying a small child in moving from the retracted to the extended configuration.

9. A foldable push chair as claimed in any preceding claim in which the spring means (50,51) comprise gas struts.

10. A foldable push chair as claimed in any preceding claim in which the front legs (31,34) rotate together about a common axis and the rear legs (32,33) rotate together about a common axis.

11. A foldable push chair as claimed in any preceding claim including actuator means (40) operable to push the legs from the retracted position towards the extended position.

12. A foldable push chair as claimed in claim 11 in which the actuator means comprise a lever (40) which is pivotable with respect to the frame.
